# EUROPEAN PATENT APPLICATION

(11) **EP 2 945 387 A1**
(43) Date of publication of application: **18.11.2015**
(21) Application number: 14305693.5
(22) Date of filing: 13.05.2014
(51) Int. Cl.: H04N 19/63, H03M 7/30, H04N 19/30, H04N 19/90, H04N 19/37

(54) **Method and apparatus for encoding and decoding video**

(71) Applicant: ALCATEL LUCENT, 92100 Boulogne-Billancourt (FR)
(72) Inventor: De Vleeschauwer, Danny, 2018 Antwerpen (BE); Lou, Zhe, 2018 Antwerpen (BE)
(74) Representative: ALU Antw Patent Attorneys

(57) **Abstract**

An encoding apparatus (EA1; EA2; EA3) for encoding video data, is configured to
- receive a high quality video (HV)
- generate from said high quality video (HV) a base layer (BL) being a compressed low quality video stream (LV), in accordance with parameters (cp) determining this low quality,
- further generate a high quality prediction and residual signal(ΔHQ), and to perform thereon a discrete wavelet transform operation (DWT), thereby obtaining a set of DWT sub-band signals,
- perform sparse signal compression on said set of DWT sub-band signals for thereby generating a set of independent enhancement layers (E1,...,E7),
- provide said base layer (BL) and said set of independent enhancement layers (E1,...,E7) as encoded video output signals on an output of said encoding apparatus.

A decoding apparatus for decoding such encoded signals is disclosed as well.

## Description

The present invention relates to a method of encoding a video sequence, and for subsequently transmitting the encoded video sequence.

Nowadays several standardized techniques are used for compressing video sequences with the aim to lower the amount of network resources needed to transport the information in the video sequence. There is however an inherent trade-off involved in compressing video sequences: the lower the information rate associated with the compressed video sequence, the more visually noticeable the quality degradation of the decompressed video sequence will be. As video traffic keeps increasing nowadays, not only will the traffic loads further increase, but also their variations in terms of place and time.

To cope with such problems scalable video coding, hereafter abbreviated by SVC, techniques were developed allowing multiple compressed versions, at multiple qualities, to be embedded in one information stream with a lower information rate than the sum of all information rates of the individual compressed versions. An SVC information stream consists of a base layer that corresponds to a base quality and enhancement layers that can increase the quality.

However in today's SVC schemes there is a hierarchical dependency between layers: layer (n+1) is (virtually) useless if layer n did not arrive correctly.

It is therefore an object of embodiments of the present invention to provide a solution which solves the aforementioned problems.

According to embodiments of the present invention this object is achieved by the provision of an encoding apparatus for encoding video data, the encoding apparatus being configured in accordance to claim 1.

In this way an encoding scheme is provided with a base layer and some enhancement layers that are independently decodable meaning that there is no dependence between enhancement layers and that the pieces of information within each enhancement layer packets are independently decodable. We refer to such a scheme as unordered layered video coding. It is to be remarked that the term "enhancement layer" is thus to be understood in its most elementary meaning, such that it "enhances" a base layer on which it is dependent.

In an embodiment the encoding apparatus is configured to perform said sparse signal compression as a compressive sensing operation.

In another embodiment the encoding apparatus is configured to perform said sparse signal compression as a forward error correction operation

In yet another variant the encoding apparatus is further configured to transmit said base layer over a high quality communication channel to a receiver, and to transmit one or more enhancement layers of said set of independent enhancement layers over a low quality communication channel to said receiver.

Such an encoding allows the network to treat the information stream associated with the base layer differently from the information associated with the enhancement layers. The base layer needs to be transported over a reliable channel (e.g. TCP), while the enhancement layers can be transported unreliably, e.g., over UDP (user datagram protocol) over BE (best effort), as it is not important which layer and which information of each enhancement layer arrives, but only how much information arrives.

Embodiments of the present invention relate as well to a decoding apparatus for decoding video data, in accordance to claim 5.

In an embodiment the decoding apparatus is further adapted to extract said parameters associated to said highest quality prediction from an encapsulated base layer stream incorporating said base layer.

In another embodiment the decoding apparatus is able to extract said parameters associated to said highest quality prediction from an message from a network operator.

In yet a variant embodiment the decoding apparatus is adapted to provide a request message to an encoding apparatus according to any of the previous claims 1-4 , said request message comprising a request for provision of a subset of said enhancement layers by said encoding apparatus to said decoding apparatus.

This allows for a dynamic provision of the enhancement layers from the encoder to the decoder, based upon a request of the decoder. This request thus informs the encoder which enhancement layers are preferentially received by the decoder. The decoder may have been this determination based upon network information it has access to, and/or based on client information, e.g. it is possible that the client does not need to have the highest video quality for certain activities of the client.

Further variants are set out in the appended claims.

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein:
Fig. 1 gives a high-level architectural overview of a sender comprising an encoder and a receiver comprising a decoder coupled to each other via a communications network , wherein a network management unit is present for transmitting control signals to the encoder,
Figs. 2a-b respectively depict a first and second implementation of the method for encoding at the sender,
Figs. 3a-c show different embodiments of an encoder according to the invention,
Fig. 4 shows the basic principles for performing a discrete wavelet transform on a one-dimensional signal, being performed in the encoder, and the associated inverse discrete wavelet decoding operation at the decoder,
Figs 5a-d schematically illustrate the process and result of performing a number of DWT operations on a frame of the highest quality residual signal,
Fig. 6 explains the mathematical background for the compressive sensing in an embodiment of the method,
Fig. 7 schematically illustrates an implementation of the decoding process at the receiver,
Figs. 8a-c show different embodiments of a decoder.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Embodiments of the method aim to develop an improved method for video coding and associated decoding which combines the advantages of good compression, load balancing and scalability.

Present techniques for encoding the video sequence with a multiple of information rates and hence, in various qualities for the decompressed video sequence are however costly, if all compressed versions are maintained separately.

An example of such a state-of-the-art technique is Scalable Video Coding, hereafter abbreviated by SVC, allowing multiple compressed versions, at multiple qualities, to be embedded in one information stream with a lower information rate than the sum of all information rates of the individual compressed versions. An SVC information stream therefore consists of a base layer that corresponds to a base quality and enhancement layers that can increase the quality. With such an SVC information stream the transmitted video quality can be locally adapted in function of the measured network throughput that is available for the video by transmitting only those parts of the SVC stream that fit in the throughput. In particular, the base layer is requested first and consequently as many enhancement layers as the throughput allows are requested. This allows a continuous adaptation of the transmitted video quality to the varying network throughput.

However present day's SVC schemes make use of a hierarchical dependency between layers, implying that layer n+1 cannot be used unless layer n had been received correctly.

This however again puts a burden on the required traffic, and flexibility.

Therefore embodiments of the present method encode the input video in a base layer and independently decodable enhancement layers. In an embodiment this base layer can be a H.264 compatible base layer such as is used in SVC, but in another embodiment a base layer in accordance to another coding scheme can be used such as HEVC (H.265), MPEG2, DIVX, VC-1, VP8, VP9.

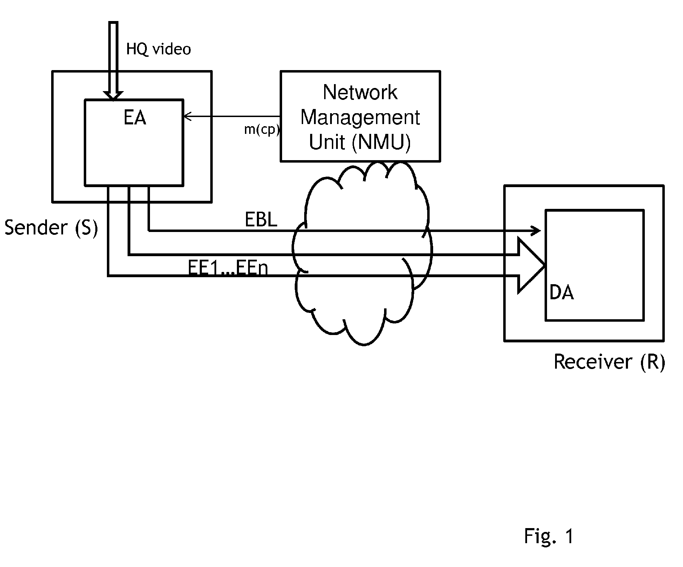

This base layer provides the minimum, but still tolerable, quality, which the network is designed to always support. This information about which quality the network can always support is usually expressed by means of resolution, frame rate, color fidelity (i.e., the number of bits used to represent the color of a pixel) and is in an embodiment known by a network management unit NMU , generally controlled by a video sequence provider or a network operator. Such a network management unit NMU is also shown in Fig. 1. This information is thus provided by the NMU to the sender S comprising an encoder EA, by means of a message comprising control parameters cp. This message is denoted m(cp) in Fig. 1.

In an alternative embodiment these parameters are known beforehand and be stored in the encoder.

The encapsulated base layer, denoted EBL in Fig. 1, is transported over a high priority connection e.g. a TCP connection or over a bit pipe that receives priority treatment.

The encoder EA will also create enhancement layers which are all individually decodable by decoder DA of the receiver R, provided the base layer is correctly received. The more enhancement layers are received the better the quality of the decoded video. These enhancement layers are transported over a lower quality connection, e.g. UDP over the Best Effort service.

The encapsulated enhancement layers are schematically denoted EE1 to EEn in fig. 1, for an embodiment wherein n enhancement layers are provided by the encoder. A typical value of n can be 7, as will be further shown in the following examples, but also a value of 10 or 13 or 16 or even higher can be possible.

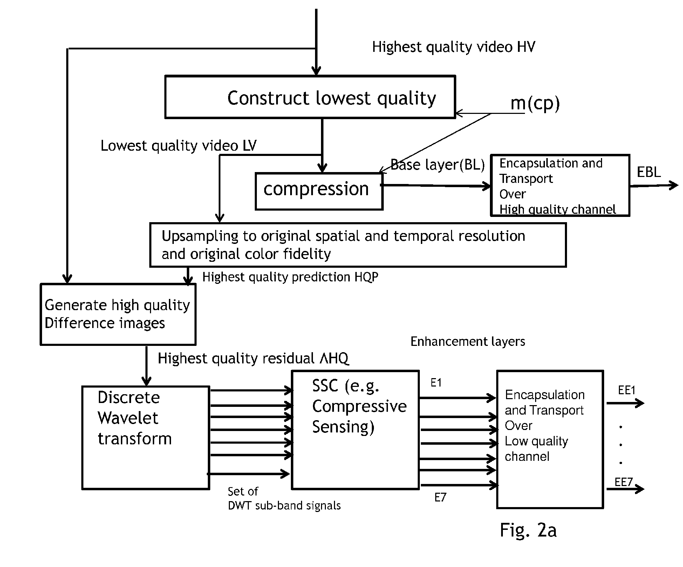

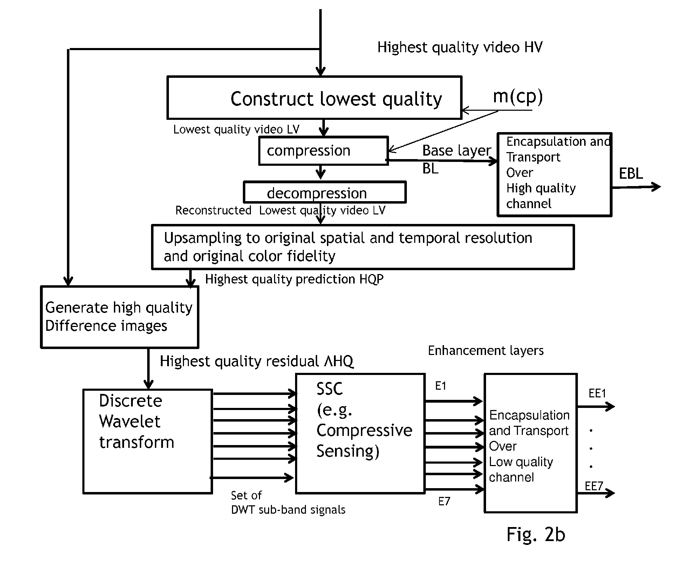

How these base and enhancement layers are created by the encoder EA, is schematically illustrated in figs 2a and b, each showing an embodiment of the encoding method.

Referring to fig. 2a, the video sequence in highest quality, in general thus having the highest temporal and spatial resolution and color fidelity, is received. From this high quality version HV, a lowest quality version LV is constructed. To this purpose some parameters reflecting the encoding for generating this lowest quality version such as temporal and spatial resolution and color fidelity, were earlier provided by the video sequence provider or network operator by means of a message m(cp). Alternatively they may have been earlier communicated or even stored as default values in a memory of the encoder itself.

The video sequence provider or network operator may have determined these parameters associated to this lowest quality version based on quality of experience data from his users as well as based on its knowledge of an associated information rate being supported by the network even during the busiest hour when the network is highly congested. In an example where the highest resolution of a HV video is 3840 pixels/line, 2160 lines/frame at 60 frames/sec and 12 bits/pixel, the video sequence provider or network operator may have determined that the lowest quality which the network should support, and which is still acceptable to users, is 720 pixels/line, 400 lines/frame, at 30 frames/sec and 8 bits/pixel. These values will thus be known by the encoder E which will accordingly create a lowest quality video which is further compressed to a base layer in accordance with these parameters.

It is known in the state-of-the-art that the construction of such a lowest quality video, generally involves a spatial or temporal down-sampling respectively, such as to reduce the spatial and/or temporal resolution. However this may introduce visually disturbing frequency aliasing effects. To avoid such effects, prior to the down-sampling step(s) a low-pass filtering is often used that suppresses the frequencies that would cause aliasing. Presently various state-of-the-art anti-aliasing filters can be used to that purpose, one possible implementation of this anti-aliasing filter e.g. being a base-band filter that is also used during the discrete wavelet transform generation, being a subsequent step of the process, as will be further described into more details in a further paragraph of this document.

In case a reduction in color fidelity is part of this construction of the lowest quality video, e.g. a downsizing from 12 bits/pixel to 8 bits/pixel, this particular step can be performed by re-quantizing the color samples, e.g., from 12 bit values to 8 bit values, e.g., by dividing the original sample values by 16 en rounding to the nearest integer.

So in an embodiment the lowest quality video, denoted LV on Figs 2a-b, construction involves a spatial and/or temporal down-sampling, optionally preceded by a low-pass filtering, and optionally followed by a re-quantization step.

Once this lowest quality version is obtained, it is further compressed by a standard codec e.g., MPEG-2, DIVX, VC-1, H264, H265, VP8, VP9, ... at an information rate (bit rate) adequate for a sequence of that spatial and temporal resolution and color fidelity. This compressed bitstream is called the base layer, is denoted BL in Figs. 2a-b, and this is next encapsulated in packets (e.g. IP packets), resulting in an encapsulated base layer EBL, which is next transported over a reliable channel (e.g. TCP).

The compression from the lowest quality video to the base layer itself also takes into account the parameters earlier communicated in the m(cp) message and from them determines the rate of the resulting base layer bitstream. It is well known by a person skilled in the art how to determine the rate from the minimum resolution, amount of bits/pixel and number of lines/frame. For the values of the aforementioned example, this bit rate is typically between 1Mbps and 1.5Mbps in case the lowest quality version video has 720 pixels/line, 400 lines/frame, at 30 frames/sec and 8 bits/pixel, often referred as standard definition (the lowest value for easy content, such as news footage, the highest value for difficult content, such as sports videos). In case the lowest quality resolution is 1280 pixels/line, 720 lines/frame, at 30 frames/sec and 8 bits/pixel (often referred to as 720p high definition) a typical bit rate is typically between 3 and 4.5Mbps. This bit rate is accordingly thus just high enough to encode a video sequence in the spatial and temporal resolution with the color fidelity of the lowest quality version without introducing annoying visible artifacts.

The encapsulated base layer is thus transported over a high quality channel, e.g. a TCP channel, or another or over a bit pipe with that receives priority treatment.

In the embodiment depicted on Fig. 2a the lowest quality video stream LV is in a next step or in parallel again up-sampled to the original spatial and temporal resolution for thereby obtaining the highest quality prediction HQP for the original video sequence.

Alternatively, in a preferred embodiment as shown in fig. 2b, the base layer BL is decompressed, thereby obtaining a reconstructed lowest quality video and this reconstructed lowest quality video further undergoes a temporal and/or spatially up-sampling and an inverse re-quantisation operation for expressing it in its original quantiser format.

Notice that these processes which take place in the sender are basically the same as these which will be later performed by the decoder in the receiver. Therefore this embodiment has the advantage that the encoder and decoder have the same video sequence to start from for performing further operations related to the construction of higher quality versions.

In both embodiments the signal resulting from the up-sampling is called highest quality prediction and is denoted HQP in Figs. 2a-b.

In both alternatives the thus generated highest quality prediction HQP is in a next step subtracted from the original high quality video HV, thereby yielding a difference video, denoted highest quality residual ΔHQ. This difference or residual video is next transformed within a discrete wavelet transform filter, abbreviated by DWT, which, as is known in the state-of-the-art may comprise a combination of low-pass and high-pass filters and which will now be explained more into detail.

A reference book for such DWT is e.g. the tutorial handbook "Wavelets and Sub-band coding", by M. Vetterli and J. Kovacevic, Prentice Hall PTR, Englewood Cliffs, New Jersey, ISBN ISBN-10: 0130970808 | ISBN-13: 978-0130970800.

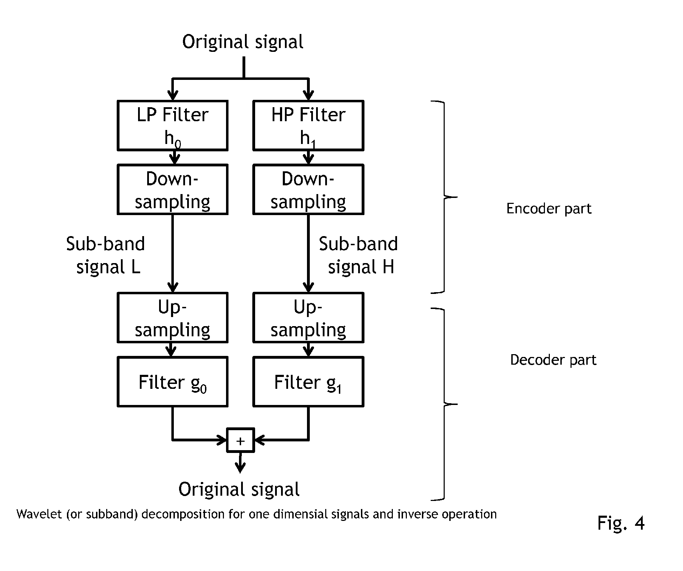

For simplicity the technique is explained for one-dimensional signals, in Fig. 4. As illustrated on this figure one step of a one-dimensional DWT decomposes a one-dimensional input signal, denoted "original signal" in Fig. 4 in a first sub-band signal "L" having low frequencies and a second sub-band signal "H" having high frequencies by respectively low-pass and high-pass filtering this signal, followed by a further down-sampling operation. The low-pass filter is denoted h0 and the high-pass filter is denoted h1. In view of the fact that two filters are involved, down-sampling by a factor 2. In the more general case of n filters, a down-sampling by a factor n could be envisaged.

The two resulting signals are often referred to as sub-band signals, respectively the L and H sub-band signal. Given these two down-sampled signals "L" and "H" the original signal can be reconstructed by up-sampling and filtering them with a filter g0 and g1 respectively and summing both contributions. The four DWT filters, h0, h1, g0 and g1 have to obey the "perfect reconstruction" property. Various combinations of such filters are known by persons skilled in the art, e.g., Haar, Daubechies, quadrature mirror filters. This process can be repeated hierarchically: i.e., the L (and H) sub-band signal can be further decomposed in a similar way, with the same filters, resulting in the "L,L"; "L,H"; "H,L" and "H,H" sub-band signals, where the character before the comma designates the one-dimensional DWT of the first stage and the letter after the comma the one-dimensional DWT of the second stage.

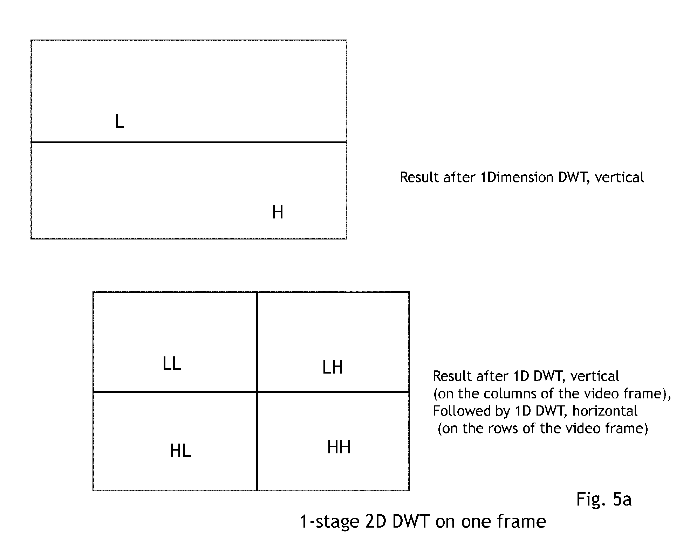

Applying this technique to the highest quality residual video involves performing this frame by frame, whereby, as each frame of the difference video itself is a two-dimensional signal, for each frame two consecutive one-dimensional DWT operations are to be applied : a first one in the horizontal direction followed by a one-dimensional DWT in the vertical direction, or vice versa as is the case for Fig. 5a. In order to apply it to the whole difference video (which is a three-dimensional signal as it comprises a series of 2-dimensional frames over time), a one-dimensional DWT needs to be applied in the horizontal direction followed by a one-dimensional DWT in the vertical direction, followed by a one-dimensional DWT in the time direction. The latter process can be performed by, taking pixels from subsequent frames having the same pixel coordinate values, and applying a 1D DWT on them. As many operations as there are pixels in a frame have to be performed.

As 3D DWT are not widespread used at the time of the invention, a more preferred embodiment is to perform 2D DWT on each successive frame, so as to keep the frame structure of the video.

Figure 5a illustrates the result after having performed a one-stage, two-dimensional DWT on such a frame. After a one-dimensional (abbreviated by 1D) DWT in the vertical direction, a L and a H sub-band result. The common representation for this is a division of the rectangular frame into two equal parts, with the upper part indicating the "L" sub-band and the lower part indicating the "H" sub-band. This is followed by performing a 1D DWT in the horizontal direction, resulting in 4 sub-bands, respectively denoted LL, LH, HL and HH. So after a first-stage two-dimensional DWT (which consists of a one-dimensional DWT in the vertical direction, followed by a one-dimensional DWT in the horizontal direction) four sub-band signals result: sub-band "LL" denotes the sub-band obtained by selecting the L sub-bands after the horizontal and vertical one-dimensional DWT; sub-band "LH" denotes the sub-band obtained by selecting the H sub-bands after the horizontal one-dimensional DWT and the L sub-bands after the vertical sub-band DWT; sub-band "HL" denotes the sub-band obtained by selecting the L sub-bands after the horizontal one-dimensional DWT and the H sub-bands after the vertical sub-band DWT; and sub-band "HH" denotes the sub-band obtained by selecting the H sub-bands after the horizontal and vertical one-dimensional DWT.

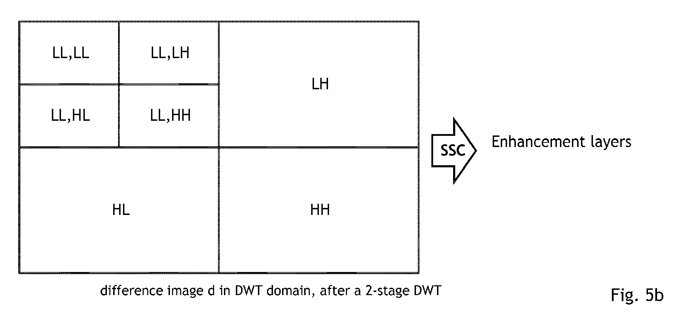

Fig. 5b then shows the result when in a next stage only the sub band "LL" is further transformed by a second two-dimensional DWT. The parts of the label before the comma designate which sub-band was selected in the two-dimensional DWT of the second stage and the part after the comma designates the sub-bands that result after the two-dimensional DWT of the second stage. Each of the small rectangles in these figures represents a DWT sub-band after the second stage.

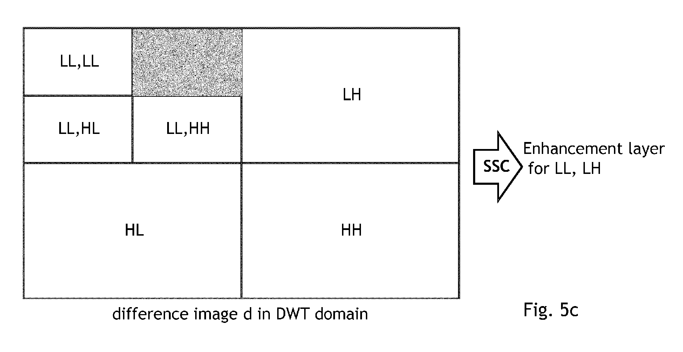

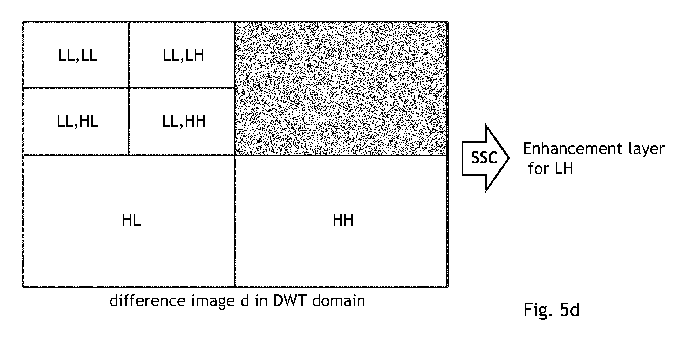

The sub-bands thus obtained are inherently sparse in the DWT domain and hence are further used for generation of the enhancement layers, by means of sparse signal compression operations on them. In Figs. 5b-d this sparse signal compression is denoted SSC . An example of such sparse signal compression is compressive sensing, but other techniques such as forward error correction coding may as well be used for this purpose of sparse signal compression. The signals obtained by this sparse signal compression are denoted enhancement layers. In the example of Fig. 5b, where all 7 sub-bands are compressed, 7 enhancement layers will result. Fig 5c indicates the selection of sub-band LL,LH for being compressed; fig. 5d shows that LH is compressed.

In the example depicted in Fig. 5b all these 7 sub-bands, represented by the 7 rectangles, are further compressed to enhancement layers. These can be further encapsulated for transmission and transport over an unreliable channel, e.g, UDP over the best effort class. In this way the enhancement layers contain information, which, when received at a receiver after transport over a an unreliable channel such as over UDP over best effort, can be used to reconstruct these sub-bands at the receiver side, as good as the receiver wants. If the receiver wants to reconstruct the full (spatial and temporal) resolution, it needs to retrieve information from all sub-bands, thus from all enhancement layers. If it needs less resolution, it needs to retrieve information from fewer sub-bands. But it is important to mention that by this technique there is no hierarchy in the sub-bands involved.

The enhancement layers themselves comprise linear combinations of the pixels belonging to one of the sub-bands, which resulted from the DWT transform operation, where the pixels can be either seen as real values or as bytes (i.e., elements of Galois field). Only pixels from the same sub-band are used per linear combination. The selection of the linear combination is unique for each sub-band, and this unique association sub-band-linear combination is also known by the decoder, such that the latter can upon receipt of an enhancement layer associated to a certain sub-band, determine the original DWT sub-band, and, from the latter in combination with the base layer a version of the video. This will be explained more into detail in a later paragraph dealing with the decoder.

These linear combinations, per sub-band, are unordered, meaning that one must not depend on the other. There are (much) less linear combinations than pixels, such that the inverse problem (i.e., obtaining the pixels from a few values resulting from these linear combinations, an operation that the receiver has to perform) is ill-posed. Therefore additional information related to the nature of the sub-bands is also incorporated in this process. Two methods are now described into more detail below.

For the first (preferred) case we notice that each of these sub-bands, which resulted from the DWT transform, is sparse. To compress the sub-bands a compressive sensing technique is used.

As is known from the state of the art, compressive sensing generates a measurement vector y (where y is a M-dimensional column vector) from a (sparse) signal x (which is an N-dimensional column vector, with M<<N) via matrix multiplication with a matrix A, y=Ax, A being a matrix having M rows and N columns. Moreover, if the signal x is sparse and A has the property that it has a small coherence, which is defined as the maximum of the normalized scalar or dot product of any pair of different columns of A, the sparse signal x can be exactly reconstructed from a sufficient number M (<<N) of measurements yk, which are the elements of y. The rows of the matrix A are referred to as templates. A measurement yk, which is a linear combination of the elements of the sparse signal x with weights being the elements of the k-th row of matrix A, expresses how well the sparse signal x matches the k-th template which is the k-th row of matrix A.

In embodiments of this invention the (sparse) vector x consist of the pixels in one of the DWT sub-bands , which are re-arranged from a two-dimensional formal into a one-dimensional column vector and the values yk are the linear combinations that are transported in one of an enhancement layer. For the matrix A various alternatives are known from the state-of-the-art. In the preferred embodiment a Gaussian or Bernoulli random matrix is used, but alternatives such as structured random matrices (e.g., a subset of the rows of the matrix associated with the fast Fourier transform) can be used too.

In particular, some measurements yk are obtained by calculating the dot product of one sub-band with some template functions. Enough measurements yk are taken (with different templates) over the selected sub-bands to be able to reconstruct that specific sub-band adequately. The more measurements yk the video client receives per sub-band the better the (selected) sub-band can be reconstructed. If not enough yk values are received, this often results in some (random) noise introduced in the sub-band which trickles through to the video of higher resolution. There is no measurement yk that is valued over another. The client just needs enough of them.

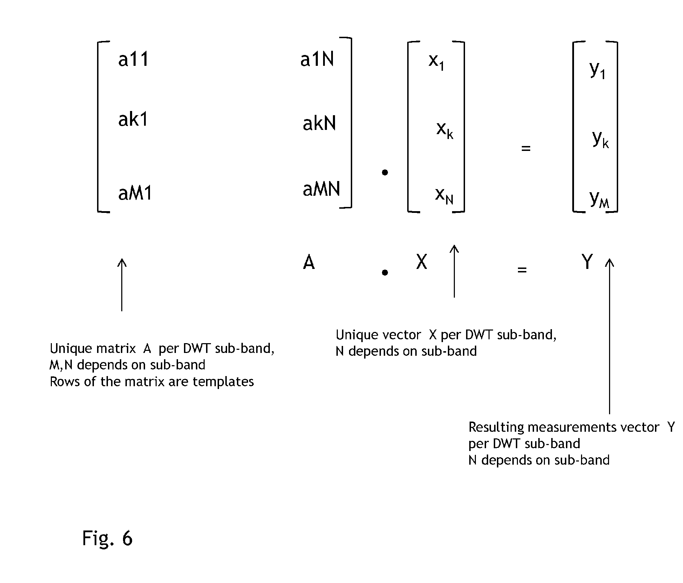

This principle is further illustrated in fig. 6.

In the state-of-the-art of compressive sensing a reconstruction algorithm can be e.g. based on the minimization of the L1 norm of the received vector with yk measurements, which relies on the sparseness of the to be reconstructed vector X, being the pixels in one of the sub-bands to make the reconstruction. However other techniques are known from the literature on compressive sensing.

The decoder needs to be aware of the matrix A (for each of the sub-bands) the video encoder used to obtain the yk, but in case the templates are generated by a Random Noise Generator, only the seed for the RNG to generate the template needs to be communicated to the receiver. The enhancement layers consist of the encoded measurements yk..

It is to be remarked that compressive sensing is not the only implementation for generating the enhancement layers. An alternative way to construct yk values is inspired by DVC which is the abbreviation of distributed video coding. In this case the sub-bands are viewed as pixels described by a byte value (i.e., an element of the Galois field of 256 elements) and the yk values are constructed via a linear FEC (forward error correction) code (e.g., a Reed-Solomon or turbo code). The decoding process consists of receiving as much yk FEC bytes as possible and selecting the most likely version of the considered sub-band given these received FEC bytes and the video in lowest quality. In this case the parameters of the linear code need to be agreed upon by the sender and receiver.

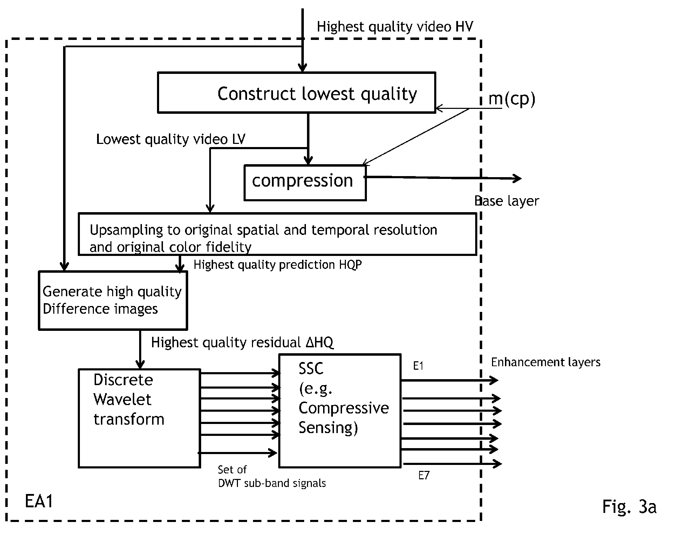

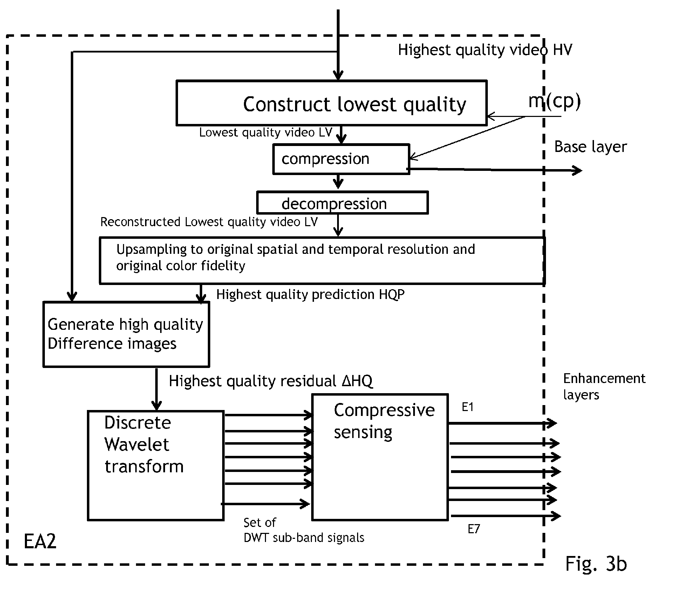

Figures 3a-c show respective embodiments of encoders implementing several variants of the aforementioned steps. The encoder of fig. 3a is the simplest one and does not perform the decompression for generation the reconstructed lowest quality video, but directly uses the generated lowest quality video for up-sampling back to the original highest quality prediction. This encoder EA1 perform the discrete wavelet transform as explained with reference to figures 5a-c, and provides the base layer and 7 enhancement layers to respective outputs of this encoder. The encoder EA2 of Fig. 3b is similar to EA1 of Fig. 3a, but is different from EA1 by the fact that it does perform the decompression for reconstruction of the lowest quality video.

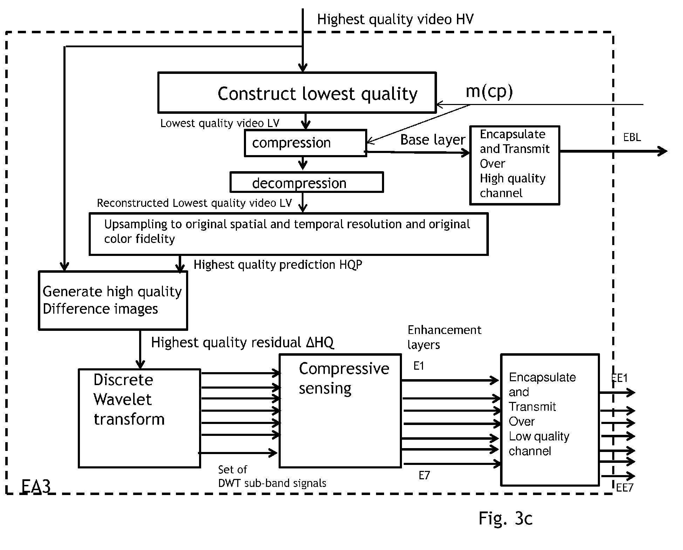

The encoder EA3 of Fig. 3c is similar to E2 of Fig. 3b, but has further encapsulation and transmission functionalities.

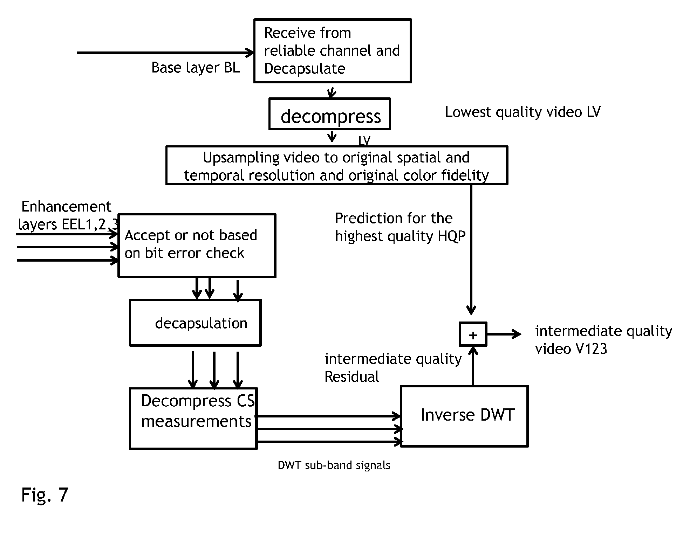

Figure 7 shows an embodiment of the decoding process at the decoder. After receiving only the base layer, only the lowest quality version of the original video can be reconstructed. After receiving the base layer together with all the transmitted enhancement layers, the highest original quality video can be reconstructed. When receiving the base layer together with a subset of the available enhancement layers, an intermediate quality can be reconstructed. In the example previously described where 7 enhancement layers were generated, the decoder is thus able to reconstruct a video version with a quality which is in accordance to these received layers. For 1 base layer and 7 enhancement layers in principle all combinations of the base layer and zero, one or more of the enhancement layers are possible. To all these possible combinations a video quality can be uniquely associated. In this respect the receiver, having knowledge of all these association quality/base/enhancement layer combinations could thus also request the sender to only provide the requested quality. In even more advanced embodiments, the request from the receiver to the sender can also be made dependent upon knowledge of the transmission channel status, e.g. it is possible that a desired quality cannot be correctly received because of network problems, such that the receiver has to request a lower quality.

We will now further describe the processes taking place upon receipt of the base layer, as well as a number of enhancement layers, with reference to fig. 7.

After receiving the base layer, it is decompressed. The resulting signal is the lowest quality video, but this is not output, unless no enhancement layers were received, or in case they were all received incorrectly, as detected e.g. by performing error checking on these layers.

From the lowest quality video LV, the highest quality prediction HQP is calculated, just in the same way as the encoder had previously calculated it, via an up-sampling operation.

The received enhancement layers can be first checked on bit errors , and, dependent on the result of this check, they will be accepted or not. The accepted enhancement layers are de-capsulated, such that the resulting signals now contains the compressive sensing measurements yk . These are used for reconstructing the sub-band signals as good as the number of received compressive measurements allows : the more measurements received, the better the resulting reconstruction. After having reconstructed the sub-bands, an inverse DWT is next performed in as many stages as used during encoding. Such an inverse DWT may involve of combinations of filter g0 and g1, as explained with reference to Fig. 4. Dependent on the amount of received enhancement layers, the inverse DWT will result in an approximation of the highest quality residual ΛHQ. In case all enhancement layers were received the reconstruction of the highest quality residual is perfect. But if, as is shown in Fig. 7 only a subset of these enhancement layers are received, the reconstruction of the highest quality residual is only approximate, and hence, only an intermediate quality video will result. This intermediate quality video is denoted V123 and results from the addition of the prediction of the highest quality HQP, with an intermediate quality residual signal.

As mentioned in several previous paragraphs the base layer is transported over a reliable and high-priority channel, e.g. over a TCP connection or over a channel with preferential treatment as is well-known in the state-of-the-art, such that the probability of timely and correctly receiving this layer is very high. The base layer is therefore assumed to arrive always and on time (by network design and by choosing the lowest quality and associated bit rate in a way described earlier),

The enhancement layers need an identification of which DWT sub-band they belong to and possibly which templates (or codes) where used to calculate the measurements yk that are transported in the respective enhancement layer, in case the decoder did not yet know these templates (or codes) at the stage of manufacturing. This identification is generally added in a special field during encapsulation in a transport layer. However other options exist for providing this identification, e.g. incorporating this into the first bytes of the measurements themselves. The template information can alternatively also be provided by specifying the seed of a random noise generator RNG with which the templates are generated, this information also being incorporated in a special field of the encapsulated packet.

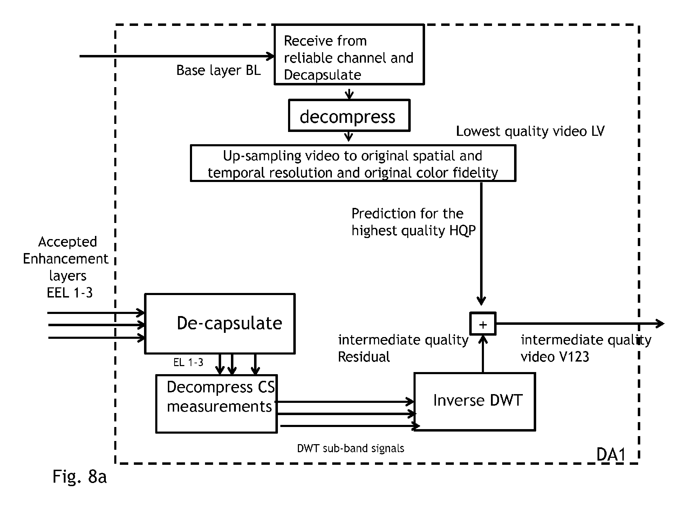

Figures 8a-c depict 3 variant embodiments of decoders.

In a first variant, shown in Fig. 8a, decoder DA1 receives the base layer from a reliable channel, starts the de-capsulation, followed by decompression using traditional decoder operations, for decoding the previously encoded lowest quality video signal. The decoder knows which traditional decompression scheme has to be used e.g. based on header information, or based on previous signaled messages.

After having obtained the decoded lowest quality video LV, this is again up-sampled to its original spatial and temporal resolution and original color fidelity. The processes used thereto are similar to those used in the encoder, and the parameters governing this process are known to the decoder, via e.g. previous signaling messages from the encoder, or from the network operator, or based on header information. Similar parameters as the ones discussed earlier for the encoder are to be provided, but now the highest resolution, highest value of bits/pixel and frames/second have to be known by the decoder.

The resulting up-sampled signal is denoted HQP and is a highest quality prediction signal.

In addition, three accepted encapsulated enhancement layers are received, indicating that the acceptance bit check already took place in another part of the receiver. The accepted encapsulated enhancement layers EEL1 to EEL3 are de-capsulated to obtain the enhancement layers themselves EL1 to EL3 . They undergo a decompression in accordance with known techniques related to reconstruction of signals obtained by compressive sensing. Such a reconstruction algorithm can be e.g. based on the minimization of the L1 norm of the received vector with yk measurements, which relies on the sparseness of the to be reconstructed vector X, being the pixels in one of the sub-bands to make the reconstruction. However other techniques are known from the literature on compressive sensing.

The decoder needs to be aware of the matrix A (for each of the sub-bands) the video encoder previously used to obtain the yk, but in case the templates are generated by a Random Noise Generator , only the seed for the RNG to generate the template needs to be communicated to the receiver. The knowledge of these matrices can already be programmed when manufacturing the decoder, or it can be programmed or stored into a memory of the decoder during later operation.

The reconstructed vector(s) X are then representative for the DWT sub-band signals, in the example of Fig. 8a three DWT sub-band signals were thus reconstructed.

These undergo an inverse DWT transform, whereby the decoder as well needs to have knowledge of the filters the encoder used, such that the decoder can select the appropriate filters which are included in the decoder. The inverse DWT may involve several stages, equal to the number of stages for the DWT itself.

The result after the DWT transform is an estimation of a residual video signal, with a quality between the lowest one and the highest one. To each combination of received enhancement layer corresponds an associated intermediate or maximum (in case all of them were received) quality value.

This associated intermediate quality residual signal is added to the highest quality prediction signal HQP, thereby resulting in an output video signal having this intermediate quality. This is denoted V123 in Fig. 8a.

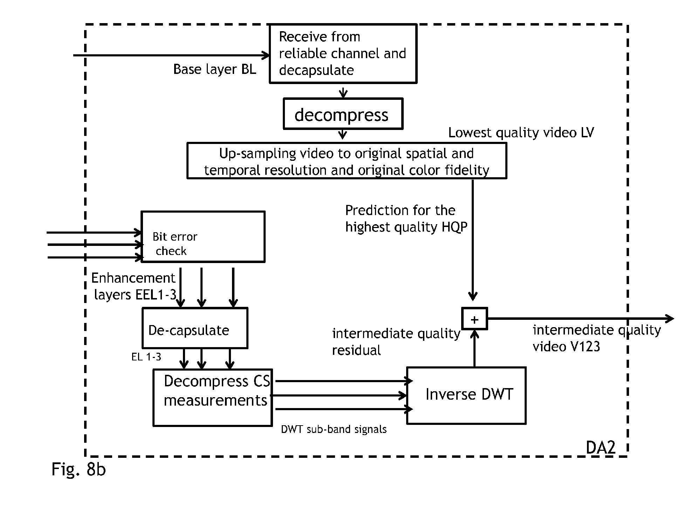

The decoder apparatus DA2 of Fig. 8b only differs from the embodiment DA1 in Fig. 8a that it performs itself the bit error check functionality for acceptance or rejection of some received enhancement layers. For the example of Fig. 8b, all received encapsulated layers EEL1 to EEL3 are accepted. Their further processing is identical to what was described in conjunction with Fig. 8a.

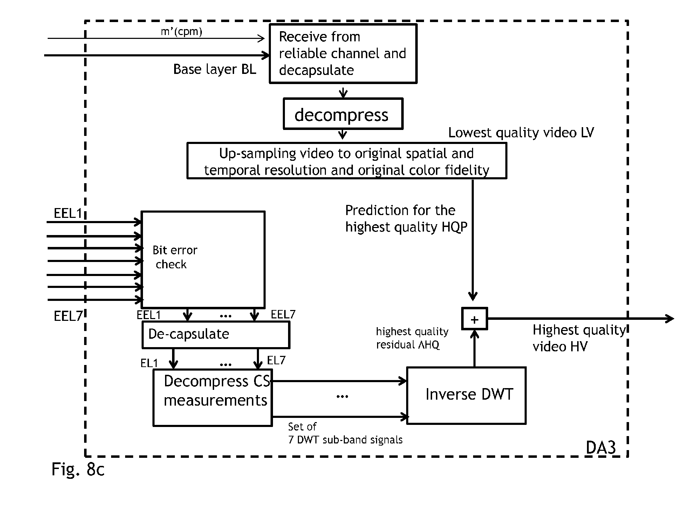

The decoder DA3 of fig. 8c is similar to the one of Fig. 8b , but also receives a signaling message m'(cpm), either provided by the encoder, either provided by the network operator, for identifying the parameters of the highest quality video.

Furthermore an example is shown in which DA3 receives the 7 encapsulated enhancement layers (EE1 to EE7), such that, in this example the maximum quality residual signal can be obtained after the inverse DWT operation. Adding the highest quality residual signal to the highest quality prediction signal will then yield the highest quality video which can be provided at an output of this decoder.

While the principles of the invention have been described above in connection with specific apparatus, it is to be clearly understood that this description is made only by way of example and not as a limitation on the scope of the invention, as defined in the appended claims.

## Claims

1. Encoding apparatus (EA1; EA2; EA3) for encoding video data, the encoding apparatus being configured to
- receive a high quality video (HV)
- generate from said high quality video (HV) a base layer (BL) being a compressed low quality video stream (LV), in accordance with parameters (cp) determining this low quality,
- further generate a high quality prediction and residual signal(ΔHQ), and to perform thereon a discrete wavelet transform operation (DWT), thereby obtaining a set of DWT sub-band signals,
- perform sparse signal compression on said set of DWT sub-band signals for thereby generating a set of independent enhancement layers (E1,...,E7),
- provide said base layer (BL) and said set of independent enhancement layers (E1,...,E7) as encoded video output signals on an output of said encoding apparatus.

2. Encoding apparatus (EA1; EA2; EA3) according to claim 1 further being configured to perform said sparse signal compression as a compressive sensing operation.

3. Encoding apparatus according to claim 1 further being configured to perform said sparse signal compression as a forward error correction operation.

4. Encoding apparatus (EA3) according to any of the previous claims further being adapted to transmit said base layer (BL) over a high quality communication channel to a decoding apparatus (DA1; DA2; DA3), and to transmit one or more enhancement layers (E1, ..., E7) of said set of independent enhancement layers over a low quality communication channel to said decoding apparatus.

5. Decoding apparatus (DA1; DA2; DA3) for decoding video data, being configured to
- receive a base layer (BL) as a compressed low quality video stream (LV),
- generate from said base (BL) layer a highest quality prediction signal (HQP), using parameters associated to said highest quality prediction,
- receive at least one enhancement layer (E1-E3; E1-E7)
- perform on said at least one enhancement layer a sparse signal decompression operation, thereby generating at least one DWT sub-band signal,
- to generate from said at least one DWT sub-band signal an associated intermediate quality residual signal,
- to add said associated intermediate quality residual signal to the highest quality prediction signal (HQP), thereby obtaining a decoded video signal (V123; HV),
- to provide said decoded video signal (V123; HV) at an output of said decoding apparatus.

6. Decoding apparatus according to claim 5 further being adapted to extract said parameters associated to said highest quality prediction from an encapsulated base layer stream incorporating said base layer.

7. Decoding apparatus according to claim 5 further being adapted to extract said parameters associated to said highest quality prediction from an message from a network operator.

8. Decoding apparatus (DA1; DA2; DA3) according to any of the previous claims 5-7, further being configured to perform said sparse signal decompression as a inverse compressive sensing operation.

9. Decoding apparatus according to any of the previous claims 5-8 further being adapted to provide a request message to an encoding apparatus according to any of the previous claims 1-4 , said request message comprising a request for provision of a subset of said enhancement layers by said encoding apparatus to said decoding apparatus.

10. Method for encoding video data, comprising
- receiving a high quality video (HV)
- generating from said high quality video (HV) a base layer (BL) being a compressed low quality video stream (LV), in accordance with parameters (cp) determining this low quality,
- further generating a high quality prediction and residual signal(ΔHQ), and performing thereon a discrete wavelet transform operation (DWT), thereby obtaining a set of DWT sub-band signals,
- performing sparse signal compression on said set of DWT sub-band signals for thereby generating a set of independent enhancement layers (E1,...,E7),
- providing said base layer (BL) and said set of independent enhancement layers (E1,...,E7) as encoded video output signals.

11. Method according to claim 10 wherein said sparse signal compression is performed as a compressive sensing operation.

12. Method according to claim 10 or 11 further comprising a step of transmitting said base layer (BL) over a high quality communication channel to a decoding apparatus (DA1; DA2; DA3), and transmitting one or more enhancement layers (E1, ..., E7) of said set of independent enhancement layers over a low quality communication channel to said decoding apparatus.

13. Method for decoding video data, comprising
- receiving a base layer (BL) as a compressed low quality video stream (LV),
- generating from said base (BL) layer a highest quality prediction signal (HQP), using parameters associated to said highest quality prediction,
- receiving at least one enhancement layer (E1-E3; E1-E7)
- performing on said at least one enhancement layer a sparse signal decompression operation, thereby generating at least one DWT sub-band signal,
- generating from said at least one DWT sub-band signal an associated intermediate quality residual signal,
- adding said associated quality residual signal to the highest quality prediction signal (HQP), thereby obtaining a decoded video signal (V123; HV) .

14. Computer program comprising software to perform the steps of the method in accordance to any of the claims 10 to 12.

15. Computer program comprising software to perform the steps of the method in accordance to claim 13.
